Europäisches Patentamt

(19) **European Patent Office**

Office européen des brevets

(11) Numéro de publication : **0 058 107**
**B1**

(12) FASCICULE DE BREVET EUROPÉEN

(45) Date de publication du fascicule du brevet :
07.11.84

(21) Numéro de dépôt : **82400102.8**

(22) Date de dépôt : **20.01.82**

(51) Int. Cl.³ : **B 60 T   1/06,** F 16 D 55/40,
F 16 D 65/853

(54) **Frein à disques de forte capacité, destiné notamment aux poids lourds.**

(30) Priorité : **21.01.81 FR 8101035**

(43) Date de publication de la demande :
**18.08.82 Bulletin 82/33**

(45) Mention de la délivrance du brevet :
**07.11.84 Bulletin 84/45**

(84) Etats contractants désignés :
**DE FR IT**

(56) Documents cités :
**DE-A- 1 817 100**
**DE-A- 2 127 410**
**FR-A- 2 407 845**
**GB-A-   905 058**
**GB-A-   915 505**
**GB-A- 1 464 101**
**GB-A- 1 517 112**
**US-A- 4 010 830**

(73) Titulaire : **LUCAS INDUSTRIES public limited company**
**Great King Street**
**Birmingham, B19 2XF (GB)**

(72) Inventeur : **Chauveau, Jean-Marc**
**2/219 Clos St Vigor**
**F-78220 Viroflay (FR)**
Inventeur : **Schmitt, Michel**
**30, Rue de la Somme**
**F-94230 Cachan (FR)**

(74) Mandataire : **De Boisse, Louis**
**37, Avenue Franklin D. Roosevelt**
**F-75008 Paris (FR)**

Jouve, 18, rue St-Denis, 75001 Paris, France

## Description

Les roues des poids lourds sont couramment équipées de puissants freins à disques de friction multiples juxtaposés pouvant, par commande hydraulique, être serrés les uns contre les autres afin de provoquer le frottement requis pour un freinage efficace, les calories engendrées par ce frottement étant évacuées par un liquide de refroidissement circulant en circuit fermé et venant baigner les disques de friction. On interpose généralement, dans la transmission un engrenage réducteur de vitesse qui, par la force des choses, est assez complexe et encombrant, alors que l'espace disponible pour le loger est plutôt réduit.

De tels mécanismes de freins à disques de friction multiples refroidis par liquide et entraînés par engrenage réducteur de vitesse, sont aujourd'hui répandus et fonctionnent de façon tout à fait satisfaisante.

Toutefois, ils occasionnent en contrepartie de très graves problèmes techniques d'entretien et de réparation dès lors que, pour accéder au cœur du frein en vue du remplacement d'une pièce défectueuse ou usée, on se heurte à l'engrenage réducteur de vitesse, ce qui nécessite des opérations compliquées et délicates de démontage et de remontage de celui-ci. Ces problèmes sont d'ailleurs d'autant plus aigus qu'on a affaire à des roues de grandes dimensions et souvent très pesantes, se prêtant mal à des manipulations sans équipements et personnels spécialisés. Ces travaux d'entretien et de réparation du frein impliquent au surplus une longue immobilisation du matériel.

Le brevet US 4 010 830 et le brevet FR 2 407 845 se sont proposés de surmonter ces difficultés grâce à un agencement mécanique conçu pour offrir un accès commode aux disques de freinage, sans nécessiter aucun démontage de roue ni même d'une partie quelconque de l'engrenage réducteur de vitesse.

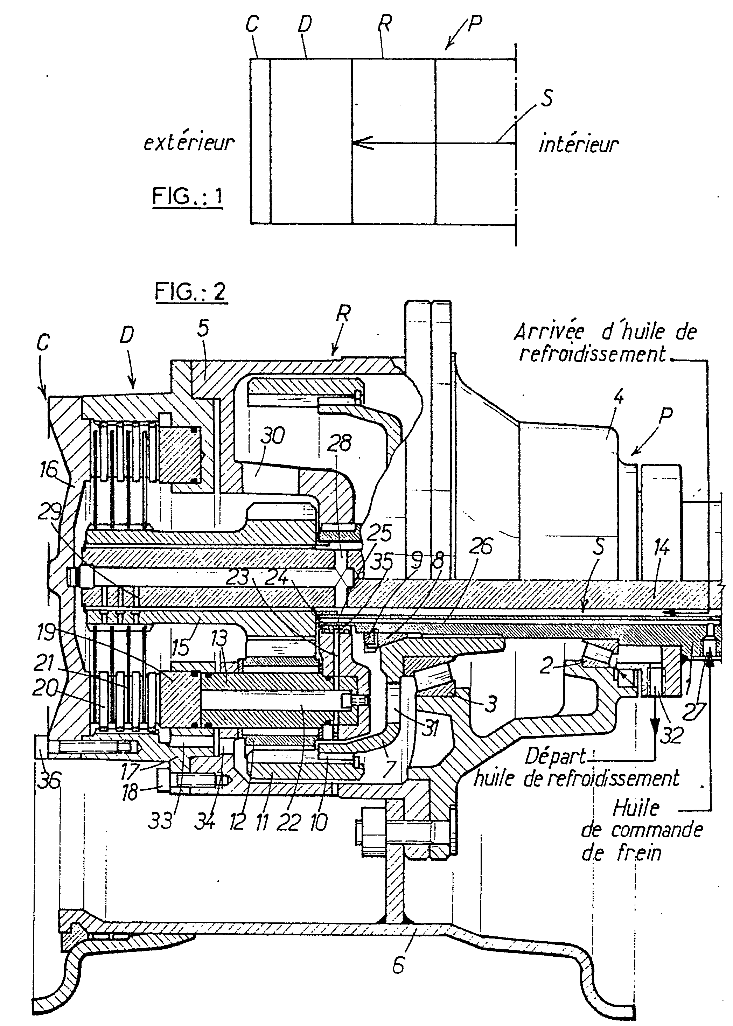

L'idée de base de cet agencement mécanique de la technique antérieure est illustrée sur la figure 1 des dessins annexés où l'on a représenté synoptiquement l'ensemble du mécanisme monté en bout du pont P d'un véhicule pour freiner celui-ci par l'entremise d'un engrenage réducteur de vitesse R associé à un dispositif de frein à disques juxtaposés D que ferme un capot amovible ou couvercle C et qui est actionné par un système de commande hydraulique S. Dans cet agencement, la juxtaposition de disques D est située vers l'extérieur du pont P au-delà de l'engrenage réducteur R, le couvercle C étant lui-même disposé extérieurement à la juxtaposition de disques D, de sorte qu'il suffit de retirer ce couvercle C pour avoir directement accès aux disques D, sans perturber le réducteur R ni le système de commande hydraulique de freinage S. En prévoyant un couvercle C de diamètre supérieur à celui des disques D, ceux-ci pourront être aisément retirés ou introduits par l'ouverture béante ainsi découverte.

Pour intéressant qu'il soit, cet agencement de la technique antérieure présente néanmoins de sérieux inconvénients qui ont en définitive pour effet de réintroduire par la bande d'autres sujétions gênantes dans le cadre des travaux d'entretien et de réparation, de sorte que le problème évoqué ci-dessus, loin d'être résolu, se trouve simplement déplacé et demeure, sinon entier, du moins aigu.

Ainsi, dans le brevet US 4 010 830 sus-mentionné, la commande du dispositif de frein à disques juxtaposés s'exerce par un système de cylindre et piston hydraulique qui est monté sur le capot amovible ou couvercle extérieur, de sorte que le démontage de celui-ci pour accéder aux disques de freinage entraîne nécessairement l'extraction du système de cylindre et piston hydraulique et, par voie de conséquence, une profonde perturbation apportée inéluctablement au circuit hydraulique de commande du frein, quand bien même ce dernier n'est pas en cause et n'aurait en principe requis aucune manipulation.

Pour ce qui est du brevet FR 2 407 845 sus-mentionné, le système de cylindre et piston hydraulique de commande du frein à disques se trouve cette fois transplanté loin à l'intérieur du pont, se situant entre les roulements du palier sur lequel tourne le moyeu de roue, de sorte que l'accès à ce système de cylindre et piston hydraulique en cas de besoin implique le démontage préalable de ce moyeu de roue, et l'on se retrouve de ce fait placé devant le même problème de départ évoqué plus haut.

La présente invention a pour objet un mécanisme répondant au principe d'agencement illustré sur la figure 1 mais sans souffrir des inconvénients qui viennent d'être signalés.

Comme dans la technique antérieure, ce mécanisme est monté en bout d'un pont de véhicule pour freiner sa roue à moyeu tournant sur palier à roulements par l'entremise d'un engrenage réducteur de vitesse associé à un dispositif de frein à disques juxtaposés qui peuvent d'une part coulisser axialement les uns par rapport aux autres sous l'action d'un système de commande hydraulique aboutissant à un cylindre à piston hydraulique agissant sur la juxtaposition des disques et d'autre part être refroidis par circulation d'un liquide dans un circuit fermé incluant le carter du dispositif de frein à disques, lequel carter est obturé de façon étanche par un couvercle externe amovible disposé extérieurement à ladite juxtaposition de disques pour y donner directement accès lorsqu'il est ôté et pour assurer l'intégrité dudit circuit fermé de refroidissement lorsqu'il est en place.

Toutefois, à la différence des mécanismes de ce genre de la technique antérieure, celui qui fait l'objet de la présente invention comporte, en bout du système de commande hydraulique du dispositif de frein à disques, un piston situé dans un plan transversal interposé entre ladite juxtaposition de disques et ledit palier à roulements, étant

disposé vers l'intérieur du pont par rapport à la première et vers l'extérieur du pont par rapport au second, de sorte qu'après avoir ôté ledit couvercle et extrait lesdits disques juxtaposés, on accède audit piston sans perturbation dudit palier à roulements ni démontage du moyeu de roue.

La description qui va suivre en regard des dessins annexés, donnée à titre d'exemple non limitatif, fera bien comprendre comment l'invention peut être réalisée.

La figure 1 est une vue synoptique dont il a été fait état dans le préambule ci-dessus.

La figure 2 est une vue en coupe axiale d'un mode de réalisation de la présente invention.

La figure 3 est une vue fragmentaire analogue d'une variante de réalisation.

Dans le mode de réalisation de la figure 2, la trompette 1 du pont P du véhicule supporte, par l'intermédiaire d'un palier à roulements coniques 2 et 3, le moyeu 4 du réducteur R sur lequel viennent se fixer le logement rotatif 5 de celui-ci ainsi que la roue 6. Un ensemble de plateau 7, de coin conique 8 et d'écrou 9 permet de régler le jeu des roulements 2 et 3. Le plateau 7 porte également une denture fixe 10 destinée à immobiliser en rotation une couronne dentée 11 sur laquelle engrènent des pignons satellites 12 tournant sur des axes 13, eux-mêmes portés par le logement rotatif 5 du réducteur R qui fait ainsi office de porte-satellites. Le mouvement est amené par l'arbre moteur 14 sur lequel est fixé le pignon central 15 du réducteur R, lequel pignon central entraîne les satellites 12. Ces derniers étant en réaction sur la denture fixe 10 de la couronne extérieure non rotative 11, il en résulte une rotation du logement porte-satellites 5 qui entraîne la roue 6 du véhicule et le moyeu 4 du réducteur R.

Ainsi qu'on l'a fait observer, le dispositif de frein à disques D qui est disposé à l'extérieur du réducteur R est accessible sans démonter la roue 6 et les garnitures de friction peuvent être changées sans nécessiter de purge du circuit hydraulique de commande S, en enlevant seulement le couvercle C, ici sous forme d'un capot étanche 16.

Ainsi qu'on l'a indiqué plus haut, cette absence d'obligation de purge du circuit hydraulique de commande pour permettre l'accès aux disques juxtaposés du dispositif de freinage, est un avantage très appréciable comparativement à l'agencement du brevet US 4 010 830 susmentionné qui impose une telle purge.

Ce frein D comprend un carter rotatif 17 rapporté sur le carter rotatif 5 du réducteur R au moyen de vis 18. En variante, les deux carters rotatifs 5 et 17 pourraient être monobloc.

De son côté, le système de commande hydraulique S aboutit à un piston-poussoir annulaire 19 installé dans un cylindre annulaire aménagé dans le carter de frein 17. En variante, ce piston annulaire 19 pourrait être remplacé par un jeu de pistons circulaires ponctuels logés dans des cylindres respectifs répartis en barillet autour de l'axe.

On notera que le cylindre à piston-poussoir hydraulique 19 de commande du dispositif de frein à disques D est situé dans un plan transversal du pont P interposé entre ce dernier et le palier à roulements 2-3, étant disposé vers l'intérieur du pont P par rapport au frein D et vers l'extérieur du pont P par rapport au palier 2-3. Ainsi, après avoir ôté le couvercle ou capot 16 et extrait les disques du frein D, on accède au piston-poussoir hydraulique 19 sans perturbation du palier 2-3 ni démontage du moyeu de roue 4-6. C'est là, comme on l'a indiqué plus haut, un avantage appréciable comparativement à l'agencement du brevet FR 2 407 845 susmentionné où le démontage du moyeu de roue ne peut être évité dès lors qu'on veut avoir accès au cylindre et piston hydraulique de commande.

Pour en revenir à la présente invention, le cœur du dispositif de frein D est constitué d'une juxtaposition de disques rotatifs qui sont alternativement des disques lisses 20 et des disques porte-garnitures 21 pouvant les uns et les autres coulisser axialement. Les disques lisses 20 sont solidaires en rotation du carter 17 au moyen de cannelures ou tout autre moyen équivalent permettant leur translation axiale sous l'action du piston-poussoir hydraulique 19, tandis que les disques porte-garnitures 21 sont quant à eux solidaires en rotation du pignon central 15. Ainsi, lorsque par le système de commande hydraulique S on actionne le piston 19, les disques lisses 20 et les disques porte-garnitures 21 viennent se presser les uns contre les autres et contre l'intérieur du capot 16. Le pignon central 15 et ses disques porte-garnitures 21 tournant à la vitesse élevée de l'arbre moteur 14, alors que les disques lisses 20 tournent à la vitesse réduite de la roue 6, on réalise un freinage à la vitesse relative entre ces deux séries de disques 20 et 21.

Le rapport de réduction du train épicycloïdal R étant supérieur à 2 dans la plupart des cas, il en résulte que cette vitesse relative de freinage est supérieure à la vitesse de la roue 6 même si les disques 20 et 21 tournent dans le même sens, et a fortiori s'ils sont contrarotatifs (dans le cas d'un étage de réduction supplémentaire), auquel cas les vitesses respectives s'ajouteraient. Aussi, à énergie égale, le couple de freinage pourra être plus faible que dans le cas ordinaire d'un frein à disque classique tournant à la vitesse de la roue.

Le piston-poussoir 19 est appliqué contre les disques 20 et 21 par une pression hydraulique issue du système de commande S. Cette pression hydraulique est exercée par un liquide tel que de l'huile parvenant derrière le piston-poussoir 19 par un circuit constitué — en allant de l'aval vers l'amont — par : un perçage longitudinal 22 de l'axe porte-satellites 13, un perçage transversal 23 de celui-ci, l'intervalle entre deux joints tournants 24 maintenus écartés par une entretoise 35, un trou 25, un perçage 26 et enfin un raccord fileté 27 de la trompette 1 du pont P.

Ce circuit d'huile du système de commande hydraulique S du frein à disques D est séparé et distinct d'un autre circuit qui sera décrit ci-après

et dans lequel on fait circuler de l'huile — éventuellement différente de celle du système de commande S — venant baigner les disques 20, 21 du dispositif de frein D afin de les refroidir, pour être ensuite rejetée vers un refroidisseur externe (non représenté), puis recyclée dans le frein D. Plus précisément, cette circulation d'huile de refroidissement du frein s'effectue par le cheminement suivant :

— Arrivée par l'intérieur du pont P autour de l'arbre moteur 14, puis passage dans un perçage 28 de ce dernier, terminé par une série de petits trous 29 qui traversent également le pignon central 15 pour déboucher entre les disques porte-garnitures 21. L'huile est centrifugée sur les disques par la rotation de l'arbre et les refroidit.

— Retour par des trous 30 du porte-satellites 13 ainsi que par des perçages 33 et 34 dans les deux carters 5 et 17, puis des trous 31 du plateau 7, pour traverser ensuite les roulements 2 et 3, et récupération sur un raccord fileté 32.

On remarquera qu'il suffit d'enlever le capot étanche 16 formant couvercle C, par simple dévissage des fixations 36, pour découvrir largement le dispositif de frein D. On peut alors extraire par coulissement axial les disques 20-21 et éventuellement le piston-poussoir 19, remplacer les pièces qui sont défectueuses et les remettre en place par coulissement axial inverse, sans la moindre intervention sur le système de commande hydraulique S ni sur le moyeu de roue 4-6. Le capot 16 étant reposé et les vis 36 serrées, l'ensemble du mécanisme retrouve son intégrité et son étanchéité.

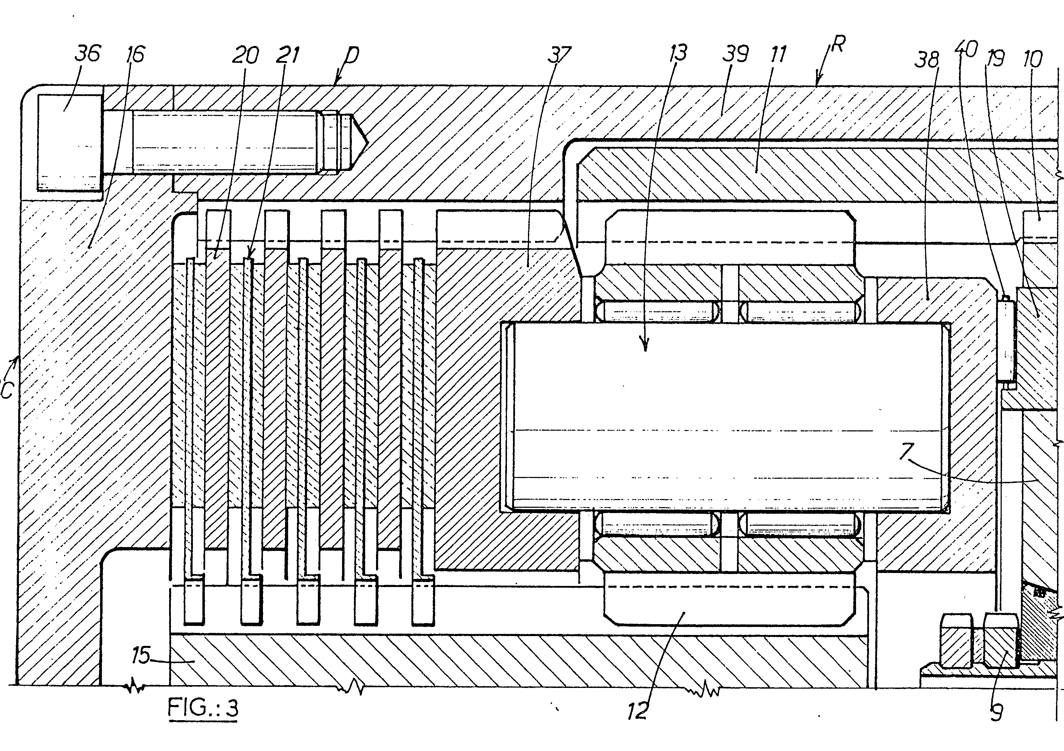

Dans la variante de la figure 3, le dispositif d'actionnement par poussoir des disques de frein 20, 21 est légèrement différent du précédent, en ce sens que le porte-satellites 13 est ici constitué de deux pièces assemblées 37, 38 et coulisse latéralement sur une denture d'un carter monobloc 39 commun au réducteur de vitesse R et au frein à disques D.

Le plateau 7 est intégré au système de commande hydraulique, s'étant vu muni du piston annulaire 19, lui-même équipé d'une butée à aiguille 40. Toutefois, pour empêcher toute rotation de ce piston, des pions sont interposés entre le piston 19 et le plateau 7 (chaque pion étant fixe dans le plateau 7 et coulissant dans le piston 19).

Lors d'un freinage, la pression hydraulique pousse le piston 19 qui, par l'intermédiaire de la butée à aiguilles 40, pousse à son tour le porte-satellites 13 qui vient presser les disques 20 et 21 les uns contre les autres et contre le capot étanche 16.

Il va de soi que les modes de réalisation décrits ne sont que des exemples et qu'on pourrait les modifier, notamment par substitution d'équivalents techniques, sans sortir pour cela du cadre de l'invention.

## Revendications

1. Mécanisme monté en bout d'un pont de véhicule (P) pour freiner sa roue (6) à moyeu (4) tournant sur palier à roulements (2-3) par l'entremise d'un engrenage réducteur de vitesse (R) associé à un dispositif de frein (D) à disques juxtaposés (20-21) qui peuvent d'une part coulisser axialement les uns par rapport aux autres sous l'action d'un système de commande hydraulique (S) aboutissant à un cylindre à piston-poussoir hydraulique (19) agissant sur la juxtaposition des disques (20-21) et d'autre part être refroidis par circulation d'un liquide dans un circuit fermé incluant le carter (17) du dispositif (D) de frein à disques (20-21), ce carter (17) étant obturé de façon étanche par un couvercle externe amovible (16) disposé extérieurement à ladite juxtaposition de disques (20-21) pour y donner directement accès lorsqu'il est ôté et pour assurer l'intégrité dudit circuit fermé de refroidissement lorsqu'il est en place, caractérisé en ce que ledit cylindre à piston-poussoir hydraulique (19) est situé dans un plan transversal interposé entre ladite juxtaposition de disques (20-21) et ledit palier à roulements (2-3), étant disposé vers l'intérieur du pont (P) par rapport à la première (20-21) et vers l'extérieur du pont (P) par rapport au second (2-3), de sorte qu'après avoir ôté ledit couvercle (16) et extrait lesdits disques juxtaposés (20-21), on accède audit piston-poussoir (19, 37) sans perturbation dudit palier à roulements (2-3) ni démontage du moyeu (4) de roue (6).

2. Mécanisme selon la revendication 1, caractérisé en ce que ledit système de commande hydraulique (S) s'étend depuis un point (27) situé vers l'intérieur du pont (P) par rapport audit palier à roulements (2-3), en direction de l'extérieur, pour atteindre en définitive, au-delà de celui-ci (2-3), le cylindre hydraulique dans lequel se meut ledit piston (19), ce dernier venant s'appliquer soit directement (figure 2) soit par l'entremise d'une transmission mécanique (38-13-37/figure 3) contre le disque le plus interne de ladite juxtaposition de disques (20-21) afin de comprimer ceux-ci de l'intérieur vers l'extérieur et contre ledit couvercle (16).

3. Mécanisme selon la revendication 2, caractérisé en ce que ledit cylindre hydraulique à piston (19) est situé vers l'extérieur par rapport audit engrenage réducteur de vitesse (R) et est de ce fait interposé entre ce dernier (R) et ladite juxtaposition de disques (20-21).

4. Mécanisme selon la revendication 1, 2 ou 3, caractérisé en ce que ledit circuit fermé de refroidissement est séparé de façon étanche dudit circuit de commande hydraulique (S), de sorte qu'au démontage dudit couvercle (16) d'obturation dudit carter (17) du dispositif de frein (D), seul ledit circuit de refroidissement est perturbé, sans aucune répercussion sur ledit circuit de commande hydraulique (S) qui conserve son intégrité.

5. Mécanisme selon la revendication 4, caractérisé en ce que les liquides respectifs de refroidissement et de commande sont des huiles distinctes l'une de l'autre.

6. Mécanisme selon la revendication 4 ou 5, caractérisé en ce que le système de commande hydraulique (S) comporte une canalisation de liquide sous pression (22) qui débouche sur ledit cylindre à piston (19) et qui est pratiquée au travers d'un ou plusieurs éléments constitutifs (13) dudit engrenage réducteur de vitesse (R).

## Claims

1. Mechanism fitted endwise of an axle housing (P) of a vehicle for braking its wheel (6) provided with a hub (4) rotating on roller bearing (2-3) through the agency of a speed reducing gear (R) associated with a brake device (D) provided with juxtaposed discs (20-21) which can, on the one hand, axially slide relatively to each other under the action of a hydraulic control system (S) leading to a hydraulic cylinder provided with a push-piston (19) acting upon the juxtaposition of discs (20-21), and on the other hand, be cooled by flow of a liquid through a closed circuit including the housing (17) of the disc brake device (D), this housing (17) being sealingly obturated by a detachable outer cover (16) arranged outwardly of said juxtaposition of discs (20-21) to give direct access thereto when it is removed and to ensure integrity of said closed cooling circuit when it is in position, characterised in that said hydraulic cylinder with push-piston (19) is located in a transverse plane intermediate said juxtaposition of discs (20-21) and said roller bearing (2-3), being fitted inwardly of axle housing (P) with respect to the former (20-21) and outwardly of axle housing (P) with respect to the latter (2-3), so that, after removal of said cover (16) and withdrawal of said juxtaposed discs (20-21), said push-piston (2-3) is accessible without upsetting said roller bearing (2-3) or dismounting the hub (4) of wheel (6).

2. Mechanism according to claim 1, characterised in that said hydraulic control system (S) extends from a point (27) located inwardly of axle housing (P) with respect to said roller bearing (2-3), towards the outside to reach eventually, beyond the latter (2-3), the hydraulic cylinder in which said piston (19) moves, the latter applying either directly (Figure 2) or through the agency of a mechanical transmission (38-13-37/Figure 3) against the innermost disc of said juxtaposition of discs (20-21) in order to compress them from the inside towards the outside and against said cover (16).

3. Mechanism according to claim 2, characterised in that said hydraulic cylinder provided with a piston (19) is located outwardly with respect to said speed reducing gear (R) and is thereby interposed between the latter (R) and said juxtaposition of discs (20-21).

4. Mechanism according to claim 1, 2 or 3, characterised in that said closed cooling circuit is sealingly separated from said hydraulic control circuit (S), so that, upon removal of said cover (16) obturating said housing (17) of the brake device (D), only said cooling circuit is upset, without any consequential effect on said hydraulic control circuit (S) which retains its integrity.

5. Mechanism according to claim 4, characterised in that the respective cooling and control liquids are oils which are distinct from one another.

6. Mechanism according to claim 4 or 5, characterised in that the hydraulic control system (S) comprises a pressure liquid duct (22) which opens into said piston cylinder (19) and which is formed through one or more component elements (13) of said speed reducing gear (R).

## Ansprüche

1. Scheibenbremse grosser Leistung, insbesondere für Lastkraftwagen, montiert am Ende einer Fahrzeugachse (P), um ein daran befindliches Rad (6) mit einer Nabe (4) zu bremsen, das sich auf einem Kugellager (2, 3) dreht, und zwar über ein Untersetzungsgetriebe (R), das mit einer Bremsvorrichtung (D) mit nebeneinanderliegenden Scheiben (20, 21) verbunden ist, die einerseits axial zueinander unter der Wirkung eines hydraulischen Steuersystems (S) gleiten, das in einem hydraulischen Zylinder mit Stosskolben (19) mündet, der auf die nebeneinanderliegende Anordnung der Scheiben (20, 21) einwirkt, und andererseits durch den Umlauf einer Flüssigkeit in einem geschlossenen Kreis gekühlt werden kann, der ein Gehäuse (17) der Bremsvorrichtung (D) mit Scheiben (20, 21) umfasst, wobei dieses Gehäuse (17) durch einen äusseren abnehmbaren Deckel (16) dicht verschlossen werden kann, der ausserhalb der nebeneinanderliegenden Anordnung der Scheiben (20, 21) vorgesehen ist, um, wenn er abgenommen wird, einen direkten Zugang zu erlauben, und um die Integrität des geschlossenen Kühlkreises zu gewährleisten, wenn er eingebaut ist, dadurch gekennzeichnet, dass der hydraulische Zylinder mit Stosskolben (19) in einer transversalen Ebene zwischen der nebeneinanderliegenden Anordnung von Scheiben (20, 21) angeordnet ist und das Kugellager (2, 3) innerhalb der Achse (P) im Vergleich zur ersten Scheibe (20, 21) und ausserhalb der Achse (P) im Vergleich zum zweiten Kugellager (2, 3), so dass nach Abnahme des Deckels (16) und Herausziehen der nebeneinanderliegenden Scheiben (20, 21) ein Zugang zu dem Stosskolben (19) entsteht, ohne dass das Kugellager (2, 3) bewegt werden muss, und ohne dass die Nabe (4) des Rades (6) demontiert werden muss.

2. Scheibenbremse nach Anspruch 1, dadurch gekennzeichnet, dass sich das hydraulische Steuersystem (S) von einem Punkt (27), der innerhalb der Achse (P) im Vergleich zum Kugellager (2, 3) liegt, nach aussen erstreckt, um schliesslich jenseits des Kugellagers (2, 3) den hydraulischen Zylinder zu erreichen, in dem sich der Kolben (19) bewegt, wobei letzterer entweder direkt (Fig. 2) oder über eine mechanische Übertragung (38-13-37/Fig. 3) die innerste Scheibe der nebeneinanderliegenden Anordnung von Scheiben (20, 21) beaufschlagt, um diese von innen nach aussen gegen den Deckel (16) zu drücken.

3. Scheibenbremse nach Anspruch 2, dadurch gekennzeichnet, dass der hydraulische Zylinder mit Kolben (19) nach aussen im Vergleich zum Untersetzungsgetriebe (R) angeordnet ist, und so zwischen diesem Untersetzungsgetriebe (R) und der nebeneinanderliegenden Anordnung von Scheiben (20, 21) liegt.

4. Scheibenbremse nach einem der Ansprüche 1, 2 oder 3, dadurch gekennzeichnet, dass der geschlossene Kühlkreis in dichter Weise von dem hydraulischen Steuerkreis (S) getrennt ist, so dass bei Demontage des Verschlussdeckels (16) des Gehäuses (17) der Bremsvorrichtung (D) nur der Kühlkreis bewegt werden muss, ohne Auswirkung auf den hydraulischen Steuerkreis (S), der seine Integrität behält.

5. Scheibenbremse nach Anspruch 4, dadurch gekennzeichnet, dass die jeweiligen Kühl- und Steuerflüssigkeiten aus unterschiedlichen Ölen bestehen.

6. Scheibenbremse nach einem der Ansprüche 4 oder 5, dadurch gekennzeichnet, dass das hydraulische Steuersystem (S) eine Druckleitung (22) für Flüssigkeit aufweist, die in den Kolbenzylinder (19) mündet, und die durch ein oder mehrere Bauelemente (13) des Untersetzungsgetriebes (R) verläuft.

**0 058 107**

FIG.: 1

extérieur                                       intérieur

FIG.: 2

Arrivée d'huile de refroidissement

Départ huile de refroidissement

Huile de commande de frein

1

0 058 107

FIG.:3